Europäisches Patentamt

European Patent Office

Office européen des brevets

(19)

(11) Numéro de publication: **0 196 263**
**B1**

(12) **FASCICULE DE BREVET EUROPEEN**

(45) Date de publication du fascicule du brevet:
20.12.89

(51) Int. Cl.⁴: **A 01 B 71/00**

(21) Numéro de dépôt: 86440025.4

(22) Date de dépôt: 27.03.86

(54) Machine agricole à dispositif de transmission perfectionné.

(30) Priorité: 28.03.85 FR 8504897

(73) Titulaire: KUHN S.A., 4, Impasse des Fabriques,
F-67700 Saverne (FR)

(43) Date de publication de la demande:
01.10.86 Bulletin 86/40

(72) Inventeur: Ermacora, Rino, 5, rue de Monswiller,
Ottersthal F-67700 Saverne (FR)
Inventeur: Krebs, Thierry, 6a, rue Edmond About,
F-67700 Saverne (FR)

(45) Mention de la délivrance du brevet:
20.12.89 Bulletin 89/51

(84) Etats contractants désignés:
DE GB IT NL

(56) Documents cités:
EP-A- 0 027 295
EP-A- 0 124 462
CH-A- 248 386
DE-B- 1 052 143

ACTORUM AG

## Description

La présente invention concerne une machine agricole munie d'un timon à la partie frontale duquel est fixé un dispositif de transmission pour la mise en mouvement des organes actifs de la machine agricole au moyen d'un dispositif de fixation comportant des organes de liaison entre ledit dispositif de transmission et le timon.

Dans la EP-A 0 124 462 est décrit une telle machine agricole dont le timon comporte à sa partie frontale une sorte de cavité prismatique déterminée par trois parois, deux parois latérales et une paroi frontale. La partie supérieure du dispositif de transmission s'étend à l'intérieur de la cavité prismatique entre les trois parois et y est fixée par un certain nombre de vis d'assemblage. En pratique, il s'est avéré que ce mode de fixation du dispositif de transmission pouvait être sujet à des desserrages des vis d'assemblage, notamment celles qui fixent le dispositif de transmission aux deux parois latérales de la cavité prismatique. Ce phénomène de desserrage est dû aux tolérances de fabrication de la partie supérieure du dispositif de transmission et surtout de la cavité prismatique, notamment les tolérances sur la distance intérieure séparant les deux parois latérales. En effet, comme le timon est une pièce mécano-soudée, les tolérances de fabrication doivent être relativement larges. Ainsi, lors du serrage des vis d'assemblage latérales, on déforme d'abord les parois latérales d'une certaine valeur avant que celles-ci n'arrivent en contact avec la partie supérieure du dispositif de transmission. On constate alors qu'au lieu d'obtenir un assemblage franc, on obtient un assemblage élastique, compte tenu de la déformation élastique des parois latérales. En sus, ces vis d'assemblage qui fixent le dispositif de transmission sur les parois latérales, sont sollicitées au cisaillement. On comprend alors, compte tenu du fait:
– que tout l'effort de traction nécessaire pour tirer la machine passe par les vis d'assemblage,
– que l'assemblage obtenu est en général un assemblage élastique, et
– que les vis d'assemblage latérales sont sollicitées au cisaillement,
que les vibrations engendrées par la configuration des terrains sur lesquels roule la machine pendant le travail, provoquent le desserrage des vis d'assemblage latérales, ce qui n'est bien entendu pas souhaitable. Par ailleurs, le mode d'assemblage connu ne permet pas un montage rapide et aisé, étant donné que pendant toute l'opération d'introduction et de serrage des vis d'assemblage, il faut maintenir le dispositif de transmission en le positionnant exactement pour que lesdites vis d'assemblage puissent être introduites dans les trous filetés correspondants. On comprendra donc que, compte tenu du poids relativement élevé du dispositif de transmission, son montage est long et coûteux.

Le but de la présente invention est de remédier aux inconvénients de la machine de l'art antérieur.

A cet effet, la machine agricole selon l'invention est caractérisée par le fait que ledit dispositif de fixation comporte un axe de liaison et que les organes de liaison condamnent sensiblement la rotation du dispositif de transmission autour dudit axe de liaison.

Avec ce mode de fixation du dispositif de transmission, il n'y a plus de risque de desserrage du dispositif de fixation car les efforts de traction peuvent être bien absorbés par l'axe de liaison et les organes de liaison. En sus, le montage est très rapide et très aisé car il suffit uniquement de maintenir et de positionner le dispositif de transmission pendant l'introduction de l'axe de liaison. Après l'introduction dudit axe de liaison, le dispositif est déjà lié au timon. Il suffit alors de le fixer au timon à l'aide des organes de liaison, si ceux-ci comportent des organes d'assemblage.

Selon une caractéristique supplémentaire, l'axe de liaison s'étend transversalement et de préférence perpendiculairement à l'axe longitudinal du timon. La réalisation des paliers du timon que traverse l'axe de liaison est ainsi substantiellement facilitée.

Cette réalisation des paliers du timon que traverse l'axe de liaison, de même que de l'axe de liaison lui-même est encore plus facilitée si l'axe de liaison est cylindrique. En effet, c'est cette forme qui est mécaniquement la plus facile à réaliser et donc la plus économique. Elle facilite en outre le montage de l'axe de liaison.

Selon une autre caractéristique supplémentaire, les organes de liaison sont, en partie, constitués par le timon qui limite dans au moins un sens la rotation relative du dispositif de transmission autour de l'axe de liaison.

D'autres caractéristiques et avantages de l'invention apparaîtront dans la description suivante d'un exemple non limitatif de réalisation de l'invention, description faite en référence au dessin annexé sur lequel:

La fig. 1 représente une machine agricole selon l'invention attelée à un tracteur,

La fig. 2 représente une vue latérale de la partie frontale du timon de la machine agricole de la fig. 1,

La fig. 3 représente une vue frontale de la partie frontale du timon avec une vue en coupe partielle suivant III du dispositif de fixation au niveau de l'axe de liaison, et

La fig. 4 représente une vue en coupe suivant IV du dispositif de liaison au niveau des organes de liaison.

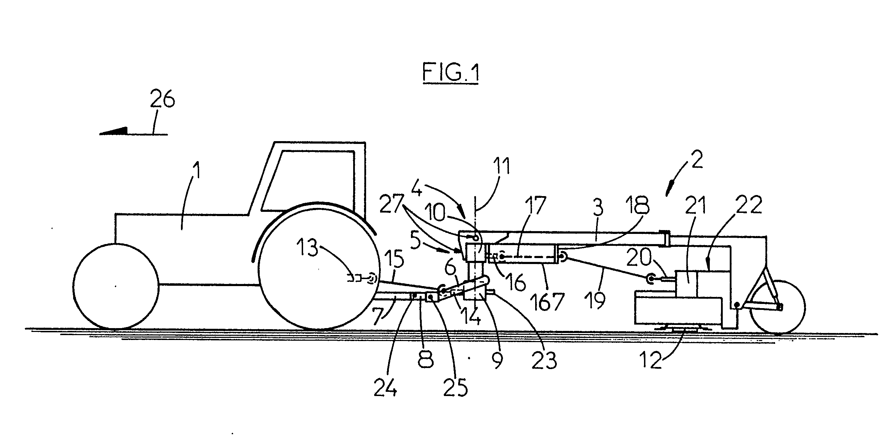

Sur la fig. 1 est représenté un ensemble agricole composé par un tracteur (1) et une machine agricole (2). Cette machine agricole (2) est munie d'un timon (3) qui permet sa liaison au tracteur (1).

A la partie frontale (4) du timon (3) est fixé un dispositif de transmission (5). Ce dispositif de transmission (5) est muni d'un cintre de traction (6) ayant avantageusement la forme d'un U en vue en plan de sorte que chaque branche du U puisse être liée à un bras inférieur (7) de l'attelage du tracteur (1). La liaison entre chaque branche du cintre de traction (6) au bras inférieur (7) correspondant est réalisée par l'intermédiaire d'un tenon oscillant (8).

Le dispositif de transmission (5) est formé de deux parties (9, 10) qui peuvent tourner l'une par rapport à l'autre autour d'un axe (11) dirigé vers le haut. L'axe (11) est de préférence sensiblement vertical. La partie primaire (9) du dispositif de transmission (5) est liée au cintre de traction (6) et la partie secondaire (10) est liée au timon (3). L'entraînement en rotation des organes actifs (12) de la machine agricole (2) se fait à partir de l'arbre de prise de force (13) du tracteur (1) qui tourne à une certaine vitesse. Cet arbre de prise de force (13) est lié à un arbre d'entrée (14) supporté par la partie primaire (9) du dispositif de transmission (5), au moyen d'un arbre de transmission à joints universels (15). Le mouvement est transmis à l'intérieur du dispositif de transmission (5) depuis l'arbre d'entrée (14) à l'arbre de sortie (16) par un mécanisme connu de l'homme de l'art. L'arbre de sortie (16) est lié à un arbre (17) qui est supporté, à son extrémité opposée à celle avec laquelle il collabore avec l'arbre de sortie (16), par un support (18) solidaire du timon (3). Pour éviter des accidents, l'arbre de sortie (16) et l'arbre (17) sont entourés par un capot de protection (167). L'arbre (17) est couplé à un deuxième arbre de transmission à joints universels (19) qui collabore avec l'arbre d'entrée (20) du carter d'entraînement (21) équipant le corps (22) de la machine agricole (2). La partie primaire (9) du dispositif de transmission (5) comporte par ailleurs un deuxième arbre d'entrée (23) qui permet, d'une manière connue de l'homme de l'art, d'entraîner les organes actifs (12) à partir d'un arbre de prise de force (13') (non représenté) qui tourne à une autre vitesse que celle à laquelle tourne l'arbre de prise de force (13).

Comme dit plus haut, la partie primaire (9) du dispositif de transmission (5) est liée au cintre de traction (6), tandis que la partie secondaire (10) est liée au timon (3).

Ainsi, comme la partie primaire (9) et la partie secondaire (10) peuvent tourner l'une par rapport à l'autre autour de l'axe (11), le cintre de traction (6) et le timon (3) peuvent également tourner l'un par rapport à l'autre autour dudit axe (11).

Par ailleurs, comme dit plus haut également, le cintre de traction (6) est lié aux bras inférieurs (7) de l'attelage du tracteur par l'intermédiaire des tenons oscillants (8). Ces tenons oscillants (8) sont respectivement liés aux bras inférieurs (7) et au cintre de traction (6) par des articulations (24 et 25).

Avec une telle construction, la machine agricole (2) possède divers degrés de liberté par rapport au tracteur (1), à savoir:
- rotation autour de l'axe (24) et/ou autour de l'axe (25), de sorte que la machine agricole (2) peut se déplacer dans un plan sensiblement vertical par rapport au tracteur (1),
- rotation autour d'un axe sensiblement parallèle à la direction de travail (26) grâce aux axes (24, 25) des tenons oscillants (8),
- rotation autour de l'axe (11) de sorte que la machine (2) peut se déplacer dans un plan sensiblement horizontal par rapport au tracteur (1).

Les deux premières rotations n'ont qu'une amplitude limitée et permettent à la machine agricole (2) de s'adapter parfaitement aux irrégularités du terrain indépendamment du tracteur (1). Cet agencement confère également plus de sécurité à l'ensemble tracteur (1) – machine agricole (2). En effet, si le poids de la machine agricole (2) est relativement important et si le terrain est très accidenté, il n'y a pas de risque que la machine (2) provoque le renversement du tracteur (1).

La troisième rotation qui permet la négociation de virages, peut avoir une amplitude très importante, de l'ordre de 90° voire plus. Mais, compte tenu de l'agencement particulier du dispositif de transmission (5), l'arbre de transmission (15) qui lie l'arbre de prise de force (13 ou 13') à l'arbre d'entrée (14 ou 23) de la partie primaire (9), ne subit aucune contrainte.

Sur la fig. 1, on voit encore que le dispositif de transmission (5) est lié au timon (3) par un dispositif de liaison (27) qui sera décrit ci-après plus en détail.

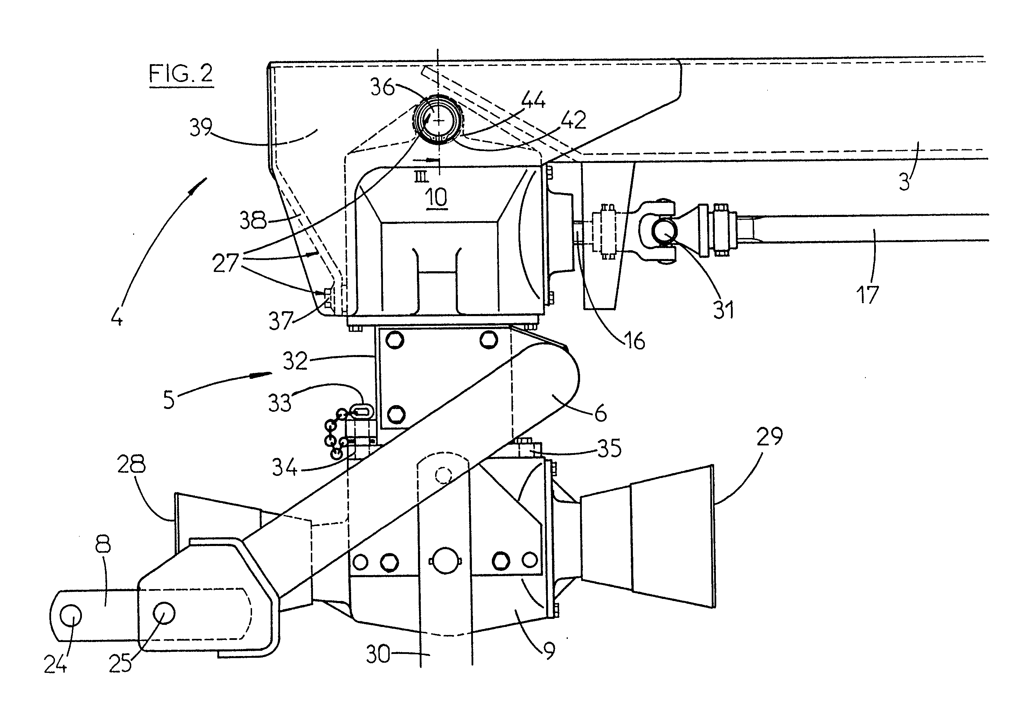

Sur la fig. 2, on a représenté à une échelle agrandie la partie frontale (4) du timon (3) où est fixé le dispositif de transmission (5).

Le capot de protection (167) a été retiré pour une plus grande clarté de la figure.

Comme dit plus haut, le dispositif de transmission (5) se compose d'une partie primaire (9), d'une partie secondaire (10) et d'un cintre de traction (6).

Sur la fig. 2, on retrouve la partie primaire (9) qui supporte les deux arbres d'entrée (14, 23) s'étendant chacun sous un bol de protection (28, 29). La partie primaire (9) supporte par ailleurs une béquille (30) qui permet de supporter la partie frontale (4) du timon (3) lorsque la machine (2) est dételée du tracteur (1).

Sur la fig. 2, on retrouve également la partie secondaire (10) qui supporte l'arbre de sortie (16) lequel est lié par un joint universel (31) à l'arbre (17).

Entre la partie primaire (9) et la partie secondaire (10) s'étend le palier (32) du cintre de traction (6) dont la rotation est verrouillée par rapport à la partie primaire (9) au moyen de la broche (33) qui peut être introduite dans le trou (34 ou 35) de la partie primaire (9), selon que c'est l'arbre d'entrée (14) ou l'arbre d'entrée (23) qui doit recevoir le mouvement de l'arbre à joints universels (15).

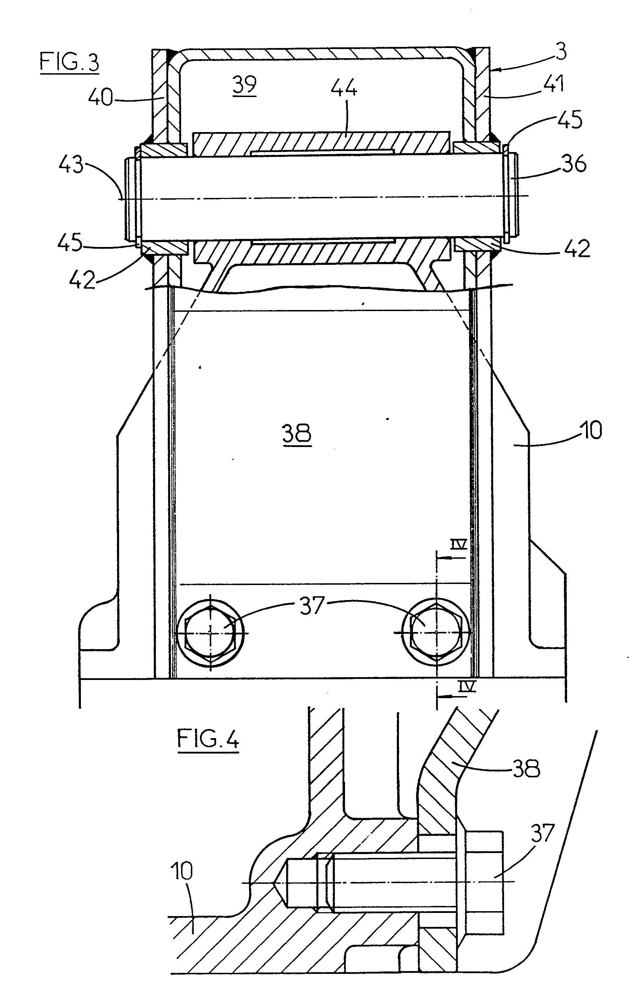

Comme visible sur les figures 2, 3 et 4, le dispositif de transmission (5) est lié au timon (3) par l'intermédiaire de la partie secondaire (10) au moyen d'un dispositif de liaison (27) qui comporte un axe de liaison (36) et des organes de liaison (37, 38) condamnant la rotation du dispositif de transmission (5) autour de l'axe de liaison (36).

A cet effet, le timon (3) est muni à sa partie frontale d'une cavité (39) ouverte vers le bas qui comporte deux parois latérales (40, 41). Dans chaque paroi latérale (40, 41) est aménagé un palier (42) qui est réalisé par une bague soudée dans un trou aménagé dans lesdites parois latérales (40, 41). L'axe (43) des deux paliers (42) s'étend sensiblement perpendiculairement à l'axe longitudinal du timon (3).

La partie secondaire (10), quant-à-elle, comporte dans sa partie supérieure un logement cylindrique (44) qui s'étend entre les parois latérales (40, 41) et plus précisément entre les paliers (42) du timon (3), de sorte que l'axe de liaison (36) puisse s'étendre au travers dudit logement cylindrique (44) et au travers des paliers (42). L'axe de liaison (36) est lié axialement au moyen de deux circlips (45).

Afin de condamner la rotation vers l'avant du dispositif de transmission (5) autour de l'axe de liaison (36) lorsque le tracteur (1) tire la machine (2), le timon (3) comporte à l'avant une butée (38) qui est réalisée sous forme d'une plaque fermant la cavité (39) à l'avant. Le dispositif de transmission (5) est par ailleurs lié au timon (3) par des vis (37) qui condamnent la rotation vers l'arrière du dispositif de transmission (5) autour de l'axe de liaison (36) lorsque le tracteur (1) fait une marche arrière avec la machine (2). Mais ces vis (37) ont également pour but de lier complètement le dispositif de transmission (5) au timon (3), ce qui évite tout matage de la partie secondaire (10) ou de la butée (38).

Avec ce dispositif de liaison (27), le montage du dispositif de transmission (5) sur le timon (3) s'opère de la manière suivante:
- on fait pénétrer la partie supérieure de la partie secondaire (10) dans la cavité (39),
- on enfile l'axe de liaison (36) au travers des paliers (42) du timon (3) et du logement cylindrique (44) de la partie secondaire (10), et on fixe axialement l'axe de liaison (36) au moyen des circlips (45),
- on lie enfin la partie secondaire (10) à la butée (38) au moyen des vis d'assemblage (37).

Comme il ressort des fig. 2 à 4, ce mode de montage du dispositif de transmission (5) sur le timon (3) est
- d'une fabrication très simple,
- d'un montage très rapide, et
- d'une grande fiabilité.

Alors que dans l'exemple, on a décrit le mode de montage d'un dispositif de transmission (5) sur la partie frontale (4) du timon (3) d'une machine agricole (2), on pourra également adopter un montage semblable d'un dispositif de transmission sur la partie arrière dudit timon dans le cas où ledit timon est lié au corps (22) de la machine au moyen d'une articulation qui permet à la machine de travailler indifféremment à droite ou à gauche du tracteur (1).

## Revendications

1. Machine agricole (2) munie d'un timon (3) à la partie frontale (4) duquel est fixé un dispositif de transmission (5) pour la mise en mouvement des organes actifs (12) de la machine agricole au moyen d'un dispositif de fixation (27) comportant des organes de liaison (37, 38), entre ledit dispositif de transmission et le timon, caractérisée par le fait que ledit dispositif de fixation (27) comporte en sus un axe de liaison (36) et que les organes de liaison (37, 38) condamnent sensiblement la rotation du dispositif de transmission (5) autour dudit axe de liaison (36).

2. Machine selon la revendication 1, caractérisée par le fait que l'axe de liaison (36) s'étend transversalement à l'axe longitudinal du timon (3).

3. Machine selon la revendication 2, caractérisée par le fait que l'axe de liaison (36) s'étend perpendiculairement à l'axe longitudinal du timon (3).

4. Machine selon l'une au moins des revendications 1 à 3, caractérisée par le fait que l'axe de liaison (36) est cylindrique.

5. Machine selon la revendication 4, caractérisée par le fait que les organes de liaison (37, 38) sont en partie constitués par le timon (3) qui limite dans au moins un sens la rotation relative du dispositif de transmission (5) par rapport au timon (3).

6. Machine selon la revendication 5, caractérisée par le fait que le timon (3) est muni d'une butée (38) faisant partie des organes de liaison, contre laquelle s'appuie le dispositif de transmission (5) lorsque la machine (2) est tirée par le véhicule tracteur (1) auquel elle est attelée.

7. Machine selon la revendication 6, caractérisée par le fait que le dispositif de transmission (5) est lié au timon (3) ou à la butée (38) du timon (3) par des organes d'assemblage (37), le timon (3) ou la butée (38) dudit timon (3) et lesdits organes d'assemblage (37) constituant les organes de liaison.

## Patentansprüche

1. Landmaschine (2) mit einer Deichsel (3), an deren Stirnseite (4) eine Übertragungseinrichtung (5) für den Antrieb aktiver Organe (12) der Landmaschine mittels einer Befestigungseinrichtung (27) befestigt ist, welche Verbindungselemente (37, 38) zwischen der Übertragungseinrichtung und der Deichsel aufweist, dadurch gekennzeichnet, dass die Befestigungseinrichtung (27) ausserdem einen Verbindungsbolzen (36) umfasst und dass die Verbindungselemente (37, 38) die Drehung der Übertragungseinrichtung (5) um den Verbindungsbolzen (36) im wesentlichen verhindern.

2. Maschine nach Anspruch 1, dadurch gekennzeichnet, dass sich der Verbindungsbolzen (36) quer zur Längsachse der Deichsel (3) erstreckt.

3. Maschine nach Anspruch 2, dadurch gekennzeichnet, dass sich der Verbindungsbolzen (36) normal zur Längsachse der Deichsel (3) erstreckt.

4. Maschine nach einem der Ansprüche 1 bis 3, dadurch gekennzeichnet, dass der Verbindungsbolzen (36) zylindrisch ist.

5. Maschine nach Anspruch 4, dadurch gekennzeichnet, dass die Verbindungselemente (37, 38) teilweise von der Deichsel (3) gebildet sind, die in zumindest die Relativdrehung der Übertragungsvorrichtung (5) in bezug auf die Deichsel (3) in einer Richtung begrenzt.

6. Maschine nach Anspruch 5, dadurch gekennzeichnet, dass die Deichsel (3) mit einem Anschlag (38) versehen ist, der einen Teil der Verbindungselemente bildet und an welchem sich die Übertragungsvorrichtung (5) abstützt, wenn die Maschine (2) von dem Schleppfahrzeug (1) gezogen wird, an welches sie angekuppelt ist.

7. Maschine nach Anspruch 6, dadurch gekennzeichnet, dass die Übertragungsvorrichtung (5) mit der Deichsel (3) oder mit dem Anschlag (38) der Deichsel (3) durch Montageelemente (37) verbunden ist, wobei die Deichsel (3) oder der Anschlag (38) der Deichsel (3) und die Montageelemente (37) die Verbindungselemente bilden.

## Claims

1. An agricultural machine (2) equipped with a pole (3) to the front portion of which a transmission device (5) for setting in motion active members (12) of the agricultural machine is fastened by means of a fastening device (27) including connecting members (37, 38) between the said transmission device and the pole, characterized by the fact that the said fastening device (27) includes in addition a connecting pin (36) and that the connecting members (37, 38) substantially block the rotation of the transmission device (5) about the said connecting pin (36).

2. A machine as in Claim 1, characterized by the fact that the connecting pin (36) extends transversely to the longitudinal axis of the pole (3).

3. A machine as in Claim 2, characterized by the fact that the connecting pin (36) extends perpendicularly to the longitudinal axis of the pole (3).

4. A machine as in at least one of the Claims 1 to 3, characterized by the fact that the connecting pin (36) is cylindrical.

5. A machine as in Claim 4, characterized by the fact that the connecting members (37, 38) consist partially of the pole (3) which limits in at least one sense the relative rotation of the transmission device (5) with respect to the pole (3).

6. A machine as in Claim 5, characterized by the fact that the pole (3) is equipped with an abutment (38) forming part of the connecting members, against which the transmission device (5) rests when the machine (2) is drawn by the tractor vehicle (1) to which it is hitched.

7. A machine as in Claim 6, characterized by the fact that the transmission device (5) is connected to the pole (3) or to the abutment (38) on the pole (3) by assembly membes (37), the pole (3) or the abutment (38) on the said pole (3) and the said assembly members (37) forming the connecting members.

FIG.1

EP 0 196 263 B1

FIG. 2

EP 0 196 263 B1

FIG.3

FIG.4